Europäisches Patentamt

European Patent Office

Office européen des brevets

(19)

(11) **EP 1 068 427 B1**

(12) **FASCICULE DE BREVET EUROPEEN**

(45) Date de publication et mention
de la délivrance du brevet:
**21.08.2002   Bulletin 2002/34**

(51) Int Cl.⁷: **F01C 9/00**, F02B 53/00

(21) Numéro de dépôt: **99900726.3**

(22) Date de dépôt: **07.01.1999**

(86) Numéro de dépôt international:
**PCT/PT99/00001**

(87) Numéro de publication internationale:
**WO 00/040837 (13.07.2000 Gazette 2000/28)**

(54) **MOTEUR ROTATIF DE COMBUSTION INTERNE A QUATRE TEMPS**

ROTIERENDE VIERTAKT BRENNKRAFTMACHINE

4-STROKE INTERNAL COMBUSTION ROTARY ENGINE

(84) Etats contractants désignés:
**AT BE CH CY DE DK ES FI FR GB GR IE IT LI LU
MC NL PT SE**

(43) Date de publication de la demande:
**17.01.2001   Bulletin 2001/03**

(73) Titulaire: **Lobo da Silva E Sousa, Manuel
2795-518 Carnaxide (PT)**

(72) Inventeur: **Lobo da Silva E Sousa, Manuel
2795-518 Carnaxide (PT)**

(56) Documents cités:
**DE-A- 19 523 736        FR-A- 1 320 215
FR-A- 2 546 973          US-A- 1 917 180**

## Description

Il s'agit d'un moteur de combustion interne à quatre temps, de mouvement rotatif, à essence ou autres combustibles formant avec l'air des mélanges explosifs.

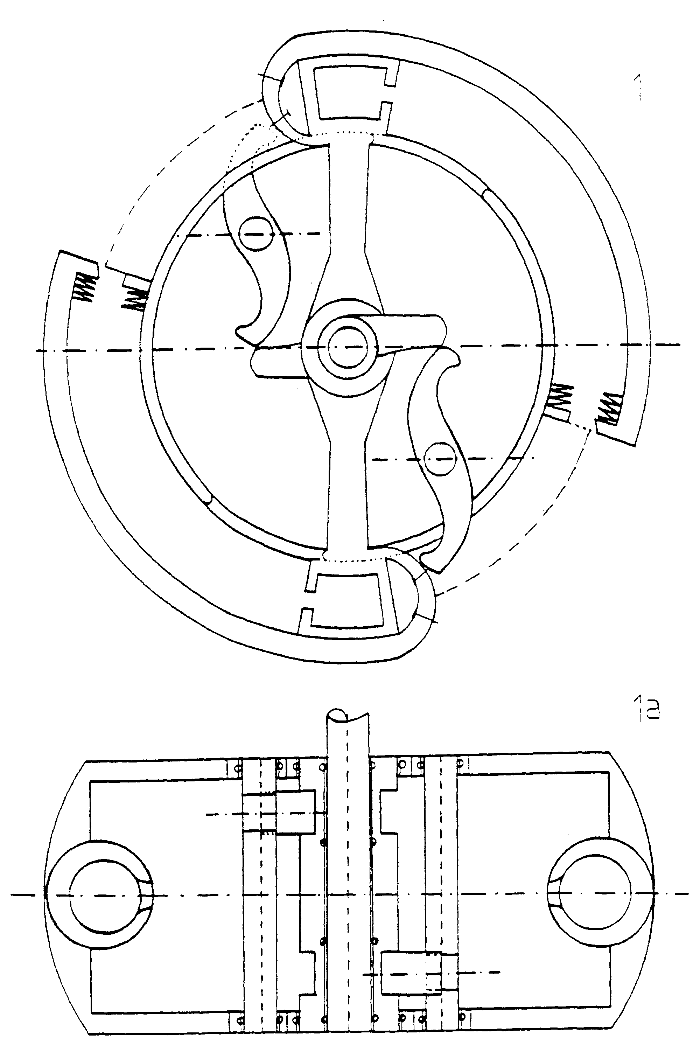

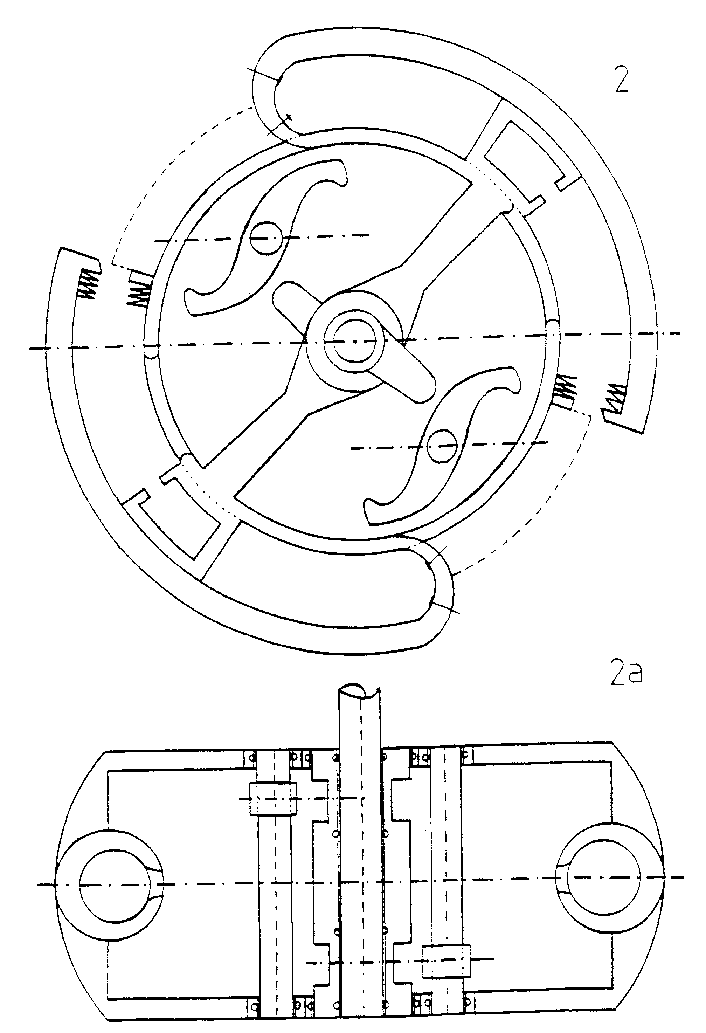

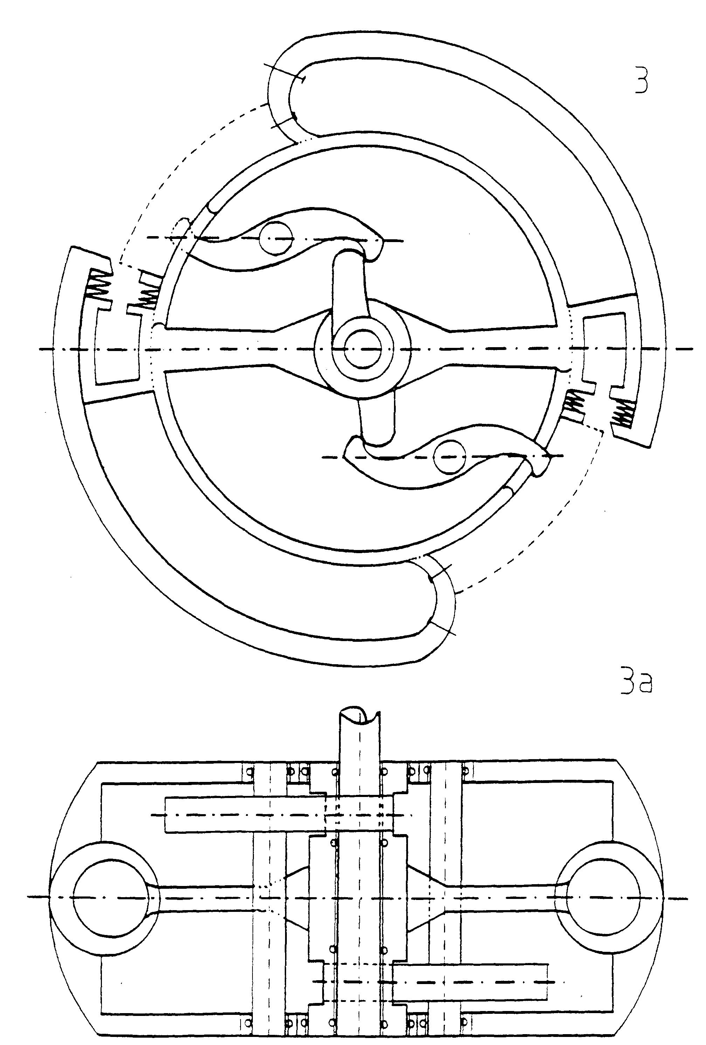

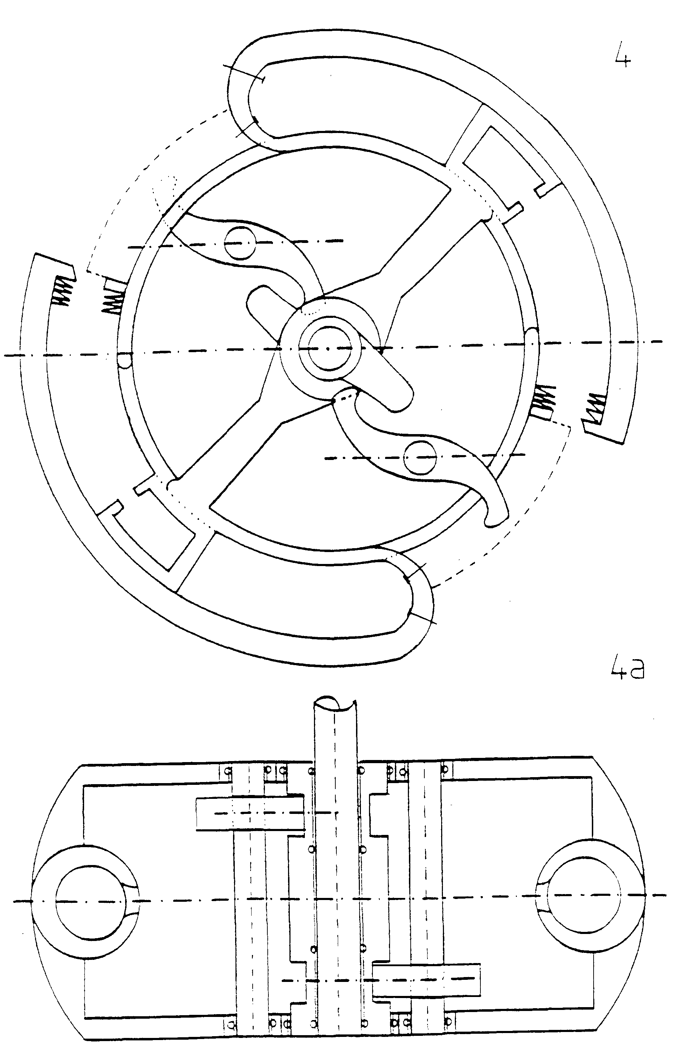

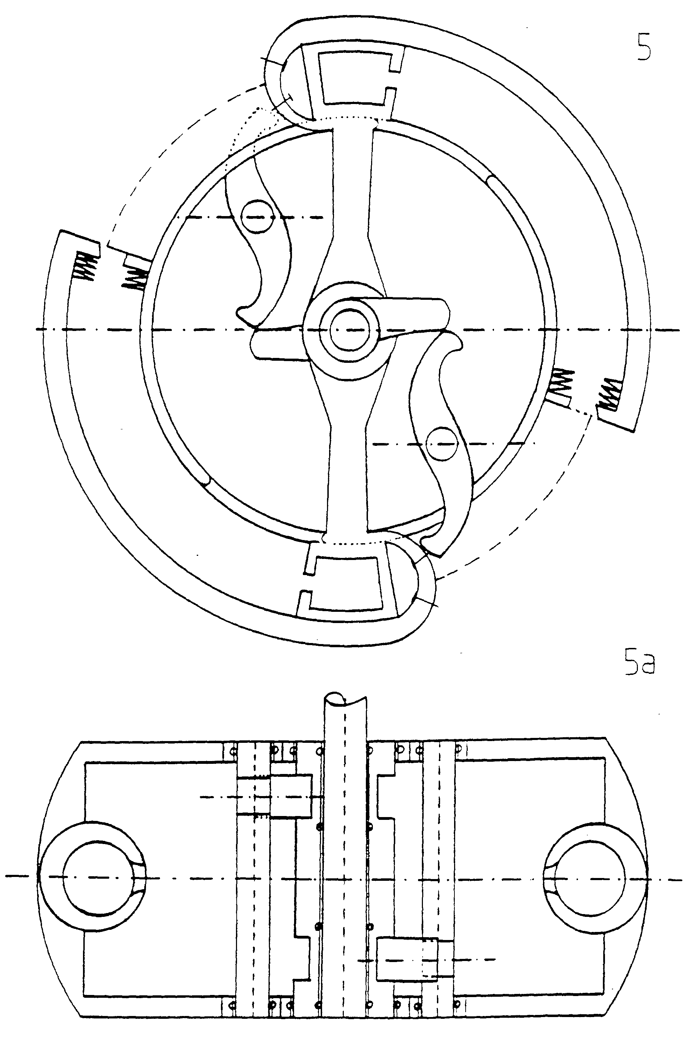

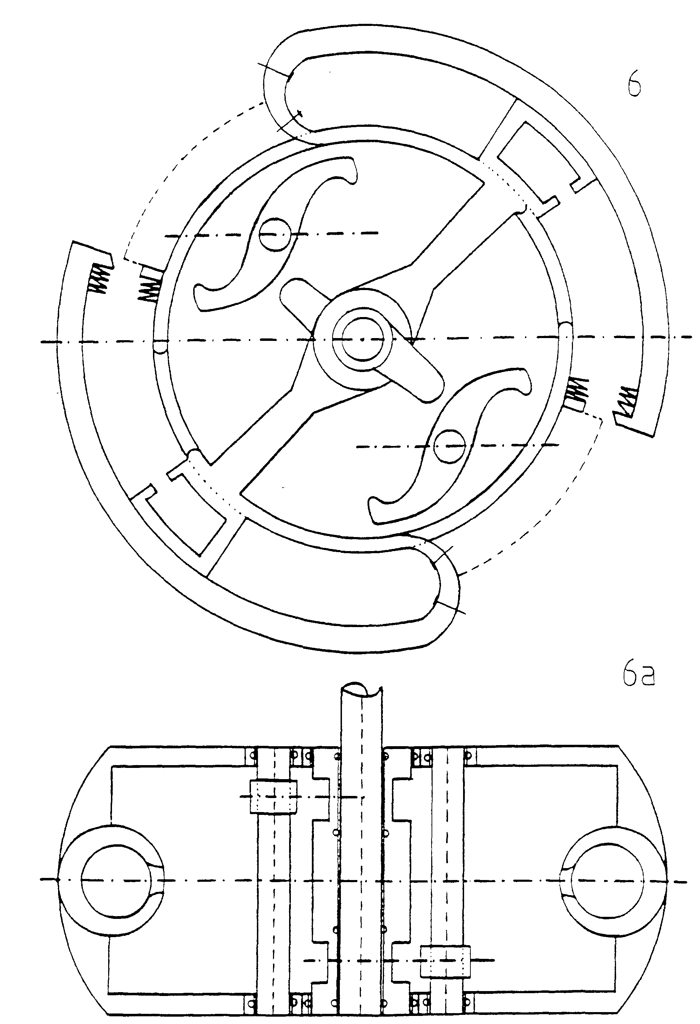

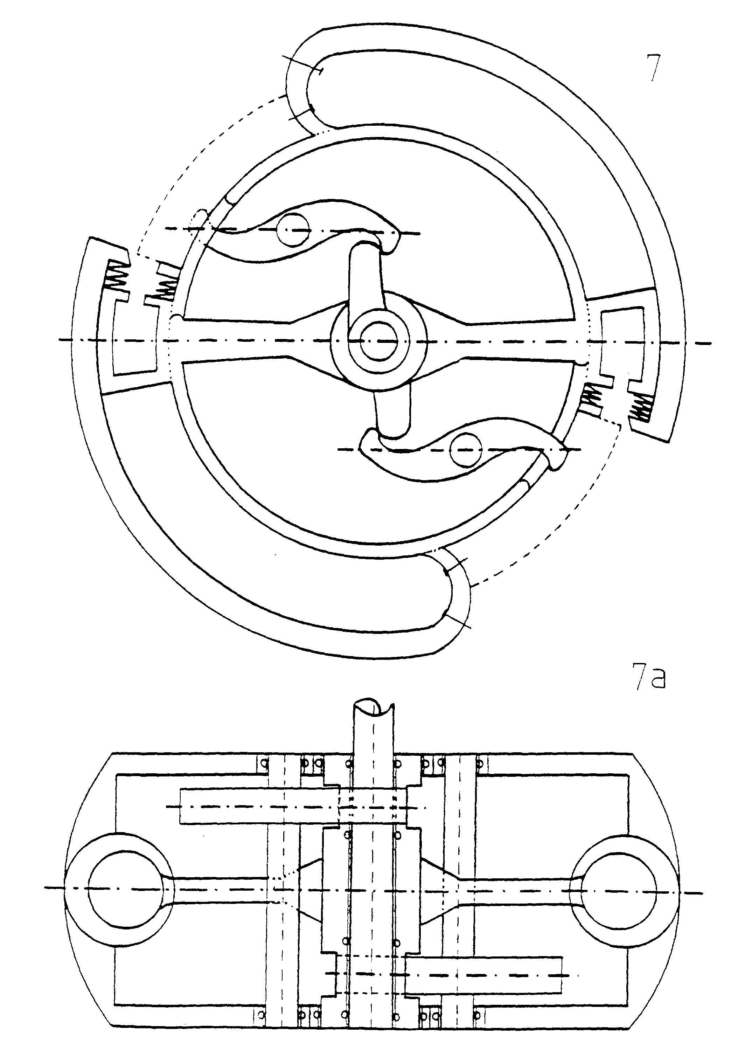

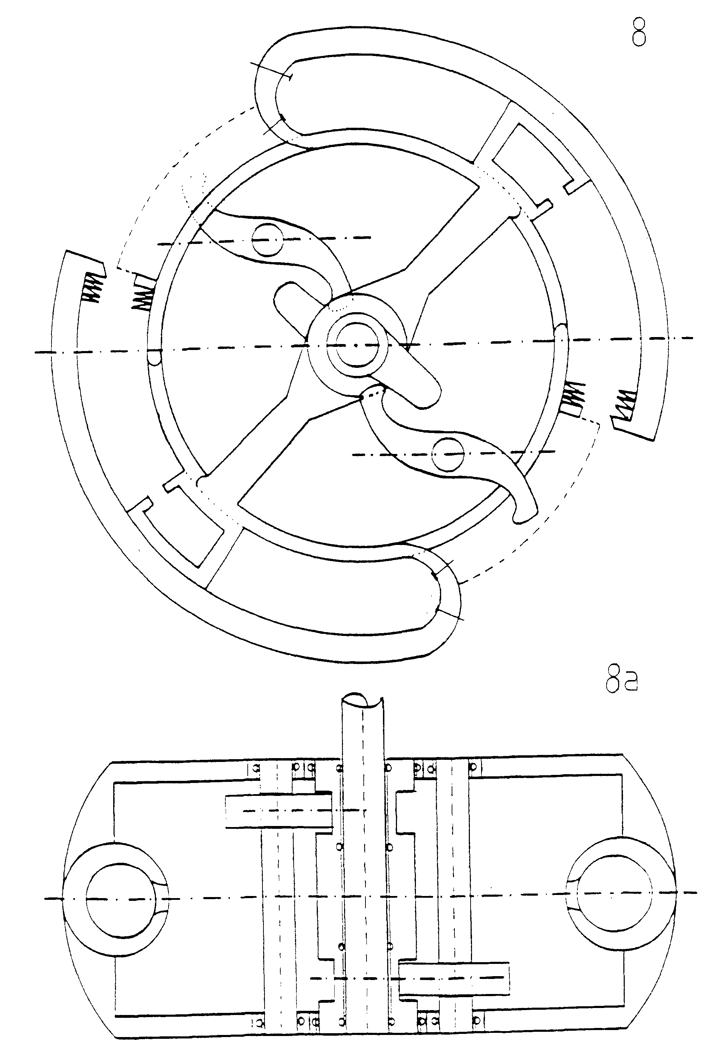

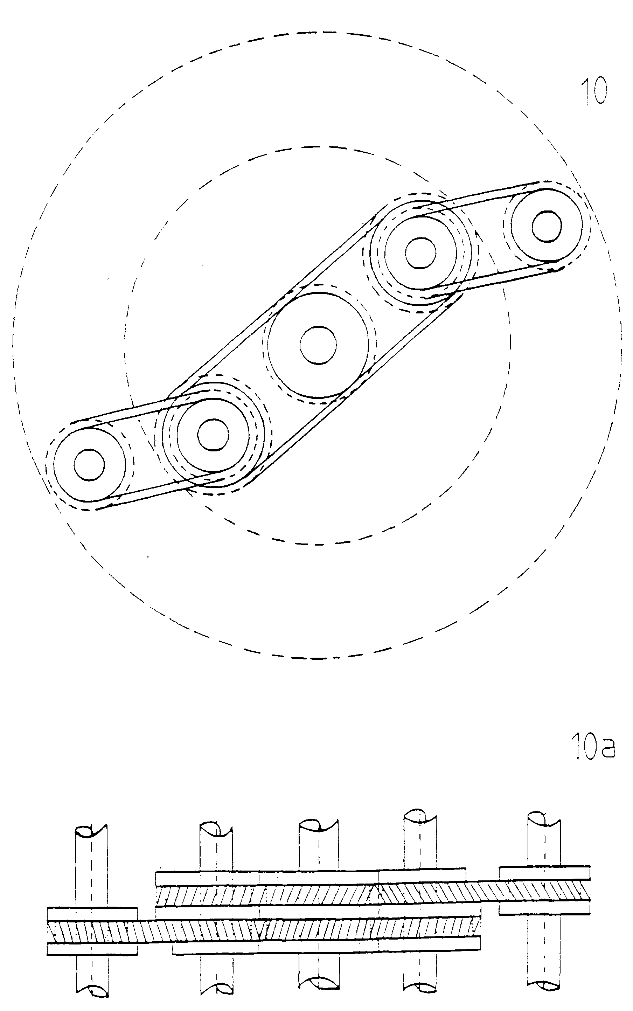

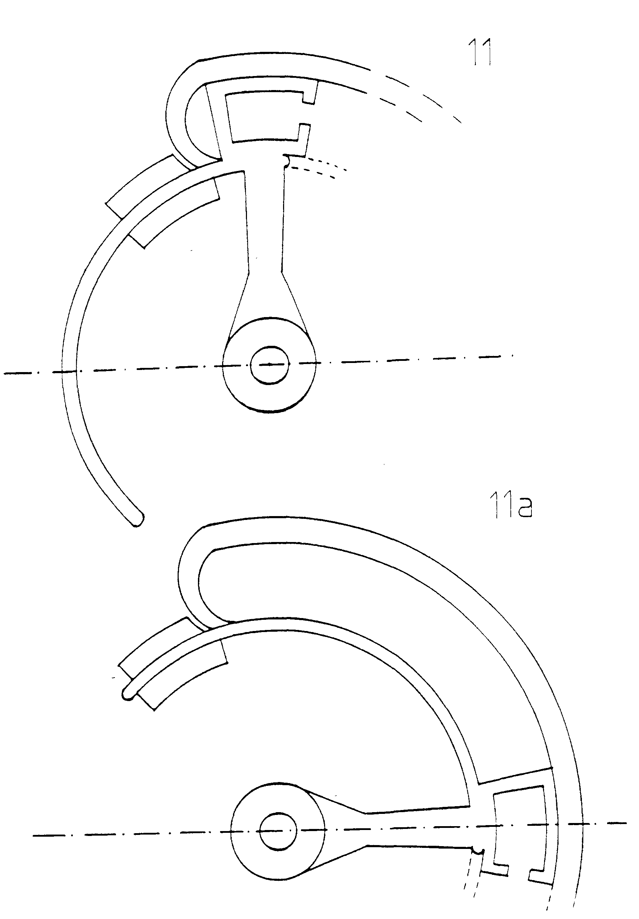

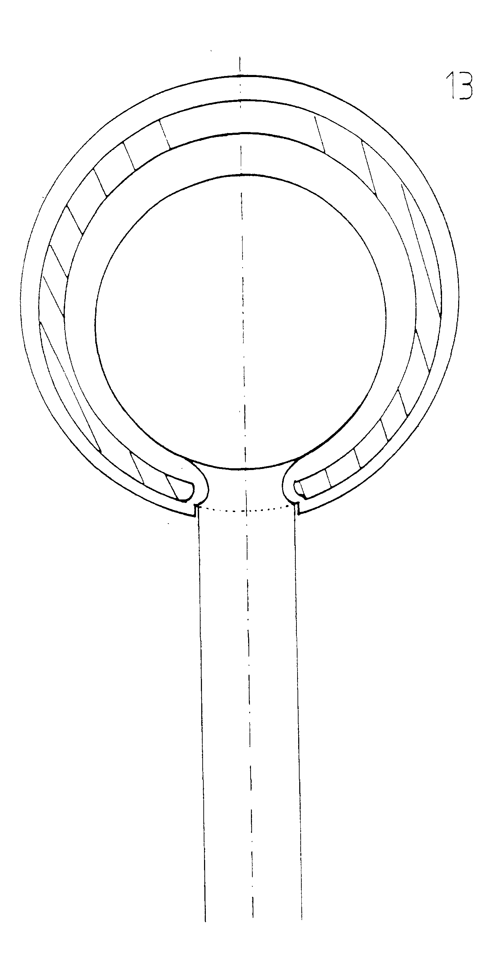

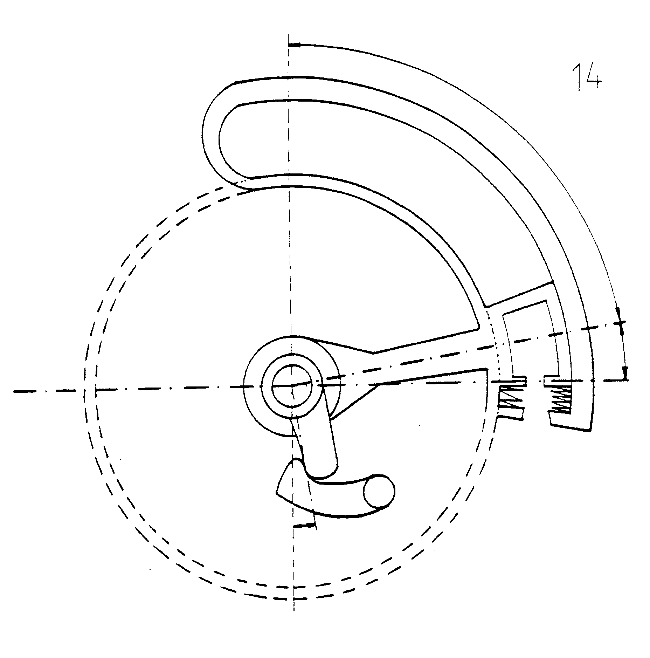

Le moteur présenté est constitué par deux cylindres toriques oppposés à 180°, à l'intérieur desquels glissent des pistons ajustés (Dessins 1 à 14).

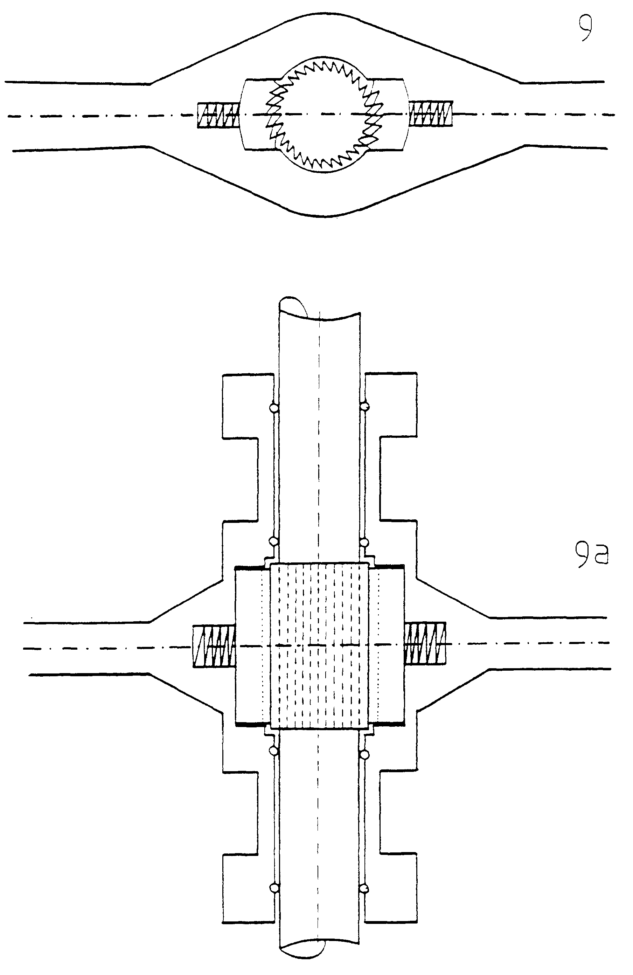

Ces pistons ont une amplitude angulaire maximale de mouvement de 90° chacun. Aux extrémités inférieures des deux cylindres il y a des ressorts forts qui permettent de ne pas dépasser cette amplitude angulaire. Les pistons présentent latéralement un système à coulisse creusé et ajusté sur tout le périmètre intérieur de l'ensemble torique circulaire. Opposées à 180° et accompagnant le mouvement des jonctions pistons / coulisses, il y a des manivelles qui effectuent des mouvements angulaires semblables. À l'autre extrémité ces manivelles sont reliées à un axe, central par rapport à l'ensemble torique, qu'elles actionnent par rotation. Cet axe, à son tour, présente à ses extrémités des leviers fixes et en opposition de phase. Nous les appellerons leviers de manivelles. Ces manivelles, grâce à un système engrenage / désengrenage, actionne l'axe moteur central, seulement dans le sens des aiguilles d'une montre et non dans le sens contraire (Dessin 9). Chacun des deux cylindres toriques fonctionne à quatre temps, de forme classique, et il ne sera pas nécessaire de faire référence à ces aspects techniques du moteur.

De même, le système d'ignition du mélange, ainsi que le système d'ouverture et fermeture des soupapes d'admission et d'échappement sont identiques à ceux existant dans les moteurs actuels.

Le mouvement des pistons comporte deux temps - l'explosion et l'admission - dans le sens moteur, c'est-à-dire dans le sens des aiguilles d'une montre. Les autres temps - compression et échappement - sont dans le sens contraire du mouvement moteur. Les deux temps dans le sens moteur sont obtenus alternativement, c'est-à-dire quand un cylindre est en explosion, l'autre est obligatoirement en admission et inversément.

Les mouvements en sens contraire sont obtenus par actionnement de deux leviers rotatifs doubles qui, actionnant en même temps et au moment approprié les leviers des manivelles, obligent les pistons à faire le mouvement contraire au mouvement moteur. Ces leviers rotatifs tournent à la même vitesse angulaire que l'axe moteur; leur axe est actionné par l'axe moteur à l'aide de chaînes dentées reliées à des roues dentées de même rayon. Ces leviers rotatifs obligent alternativement un des cylindres à entrer en compression et l'autre en échappement, et le contraire à 180°.

En utilisant comme références les 14 dessins présentés et en considérant dans les dessins 1 à 8 le cylindre supérieur comme 1 et le cylindre inférieur comme 2, nous allons faire la description du fonctionnement du moteur.

**Dessin 1** Le cylindre 1 est en compression par pression des leviers rotatifs sur les leviers des manivelles, tandis que le cylindre 2 est en échappement.

**Dessin 2** Le piston du cylindre 1 est à la moitié de son mouvement angulaire, poussé par les gaz de la combustion, tandis que le piston du cylindre 2 est à la moitié de l'admission du mélange explosif. Dans cette phase l'axe moteur est poussé. À leur tour les leviers rotatifs sont en position de ne pas perturber le mouvement moteur.

**Dessin 3** Le piston du cylindre 1 est à la fin du mouvement d'explosion et va commencer l'échappement. Le piston du cylindre 2 est à la fin de l'admission et au début de la compression. Les leviers rotatifs sont en position pour initier l'impulsion de l'ensemble manivelles / coulisses / pistons dans le sens contraire du sens moteur.

**Dessin 4** Le piston du cylindre 1 est à la moitié du mouvement d'échappement tandis que le piston du cylindre 2 est à la moitié de la compression sous l'action des leviers rotatifs.

**Dessin 5** Le piston du cylindre 1 est à la fin du mouvement d'échappement et le piston du cylindre 2 est à la fin du mouvement de compression. Les leviers rotatifs sont sur le point d'interrompre leur pression sur les manivelles, permettant que le cylindre 2 entre en phase d'explosion.

**Dessin 6** Le piston du cylindre 1 est à la moitié du mouvement d'admission tandis que le piston du cylindre 2 est à la moitié du mouvement moteur d'explosion. Les leviers rotatifs ne perturbent pas le mouvement.

**Dessin 7** Le piston du cylindre 1 est à la fin de l'admission tandis que le piston du cylindre 2 est à la fin du mouvement moteur. Les leviers rotatifs vont commencer l'impulsion des manivelles pour effectuer le mouvement contraire au mouvement moteur.

**Dessin 8** Le piston du cylindre 1 est à la moitié du mouvement de compression tandis que le piston du cylindre 2 est à la moitié de l'échappement.

Tous ces mouvements se répèteront de façon périodique selon la séquence du mouvement moteur, comme indiqué sur les dessins.

Ce moteur à deux cylindres actionne l'axe moteur de façon syncopée, 90° d'action, 90° d'inaction etc... Ainsi, à chaque rotation l'axe moteur est actionné pendant 180°.

**Dessin 9** Nous voyons le système engrenage / désengrenage agissant sur l'axe moteur. Des engrenages mobiles sont situés dans des cavités ajustées à l'intérieur des manivelles. Quand les manivelles tournent dans le sens des aiguilles d'une montre ces engrenages mobiles, poussés par les ressorts, engrènent dans les engrenages fixes de l'axe moteur, l'obligeant ainsi à tourner. Dans le sens contraire il y aura un décrochement des engrenages et aucune action sur l'axe moteur.

**Dessin 10** Le système de chaînes dentées et de roues dentées force les axes des leviers rotatifs à tourner à la même vitesse que l'axe moteur. Ainsi les axes excentriques sont reliés à l'axe central et tournent de façon synchrone avec celui-ci.

**Dessin 11** Nous voyons un détail de la rotation de l'ensemble piston / coulisse / manivelle actionné par les gaz d'explosion. Le système à coulisse accompagne le mouvement du piston, maintenant le cylindre étanche à l'échappement des gaz d'explosion. La lubrification permanente du système à coulisse est assurée par un réservoir rempli d'huile situé au-dessus et en dessous de ce système, à la sortie de la tête du cylindre. Un système identique existera pour l'autre cylindre.

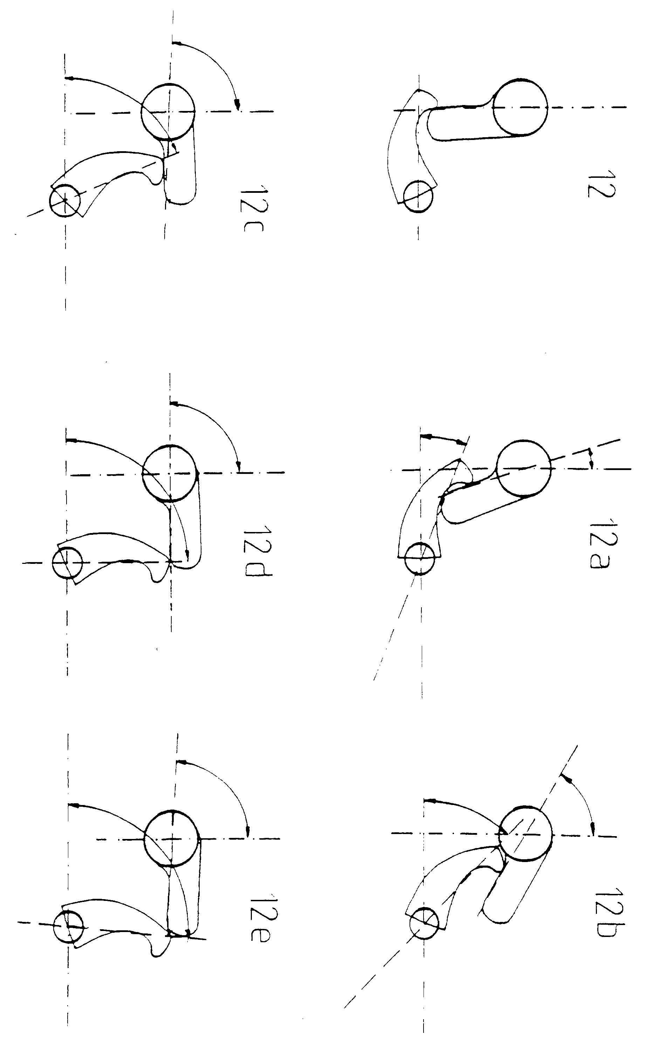

**Dessin 12** Nous voyons plusieurs phases de l'actionnement de l'un des leviers de manivelle par l'un des leviers rotatifs. À cause de son format spécial il y aura, au contact des leviers, des frictions de roulement et de glissement. C'est pourquoi ces leviers deveront être abondamment lubrifiés par un système de canaux et orifices où l'huile diffusera par centrifugation. Nous pouvons aussi voir que, quand le contact entre le levier rotatif et le levier de manivelle cesse, l'extrémité du levier rotatif s'éloigne plus rapidement que l'autre levier ne revient. Cela est dû à une plus grande vitesse linéaire de l'extrémité du levier rotatif à cause de son plus grand rayon.

**Dessin 13** Ce Dessin représente un détail du cylindre, piston, coulisse et manivelle en coupe transversale.

**Dessin 14** Ce Dessin montre que, si nous diminuons l'amplitude angulaire du mouvement des manivelles à 80°, les leviers rotatifs, bien que maintenant leur rayon, changent de format en grossissant tandis que l'angle d'attaque entre les leviers diminue.

**Autres considérations:** Ce moteur basé sur un volume torique a, pour chaque cylindre, l'expression volumétrique

$$V = \pi r^2 \beta R$$

V = volume du cylindre torique
r = rayon du piston intérieur du cylindre
R = rayon du tore qui est égal à la distance entre le centre géométrique du tore et le centre de la section circulaire du cylindre torique.
β = angle au centre décrit par par la manivelle dans son mouvement de rotation

Ces valeurs peuvent être déterminées de façon à obtenir des volumes de cylindres adaptés au moteur à construire. Ainsi, en ce qui concerne les dimensions des leviers, pour que les leviers rotatifs soient tangentiels aux leviers des manivelles à 90° quand les pistons sont en compression, il faudra que:

$$Rar = \frac{RM - Rem}{2} \quad et \quad Ram = \sqrt{RM \times Rem}$$

Étant donné:

Rem = rayon de l'axe de manivelle
RM = rayon libre de la machine
Rar = rayon des leviers rotatifs
Ram = rayon des leviers de manivelle

Pour éviter que les leviers rotatifs touchent tangentiellement l'axe des manivelles ou l'intérieur de la machine Rem doit être un peu plus petit et RM un peu plus grand que les valeurs prédéterminées.

Ce moteur à deux cylindres peut être associé à un ou plusieurs moteurs identiques, également à deux cylindres. Tous les axes peuvent être communs à l'exception des axes des manivelles qui doivent être indépendants. Pour le moteur à quatre cylindres, nous pouvons obtenir que l'axe soit actionné de façon permanente durant 360°. Pour cela les leviers rotatifs du second corps à deux cylindres doivent être déphasés de 90° par rapport au premier corps et provoquer ainsi l'explosion des cylindres dans la séquence cylindre 1 - cylindre 3 - cylindre 2 - cylindre 4. Ce moteur à quatre cylindres aura un fonctionnement doux et un couple puissant.

## Revendications

1. Moteur à combustion interne à quatre temps **caractérisé par** sa constitution en 1 ou plusieurs corps parallèles à deux cylindres toriques, le mouvement angulaire et alterné des pistons étant obtenu dans chaque corps bicylindrique à partir d'explosions successives dans les chambres de combustion des cylindres diamétralement opposés, ces cylindres ayant des ouvertures annulaires situées le long des arrêtes de plus petit diamètre, l'énergie des pistons étant extraite vers l'extérieur des cylindres grâce à la liaison rigide de la surface des arrêtes de plus petit diamètre des pistons à une coulisse glissante en anneau qui obture les ouvertures annulaires des cylindres sur toute leur extension et établit la liaison directe, séquentielle, linéaire et rigide des pistons à deux manivelles radiales reliées entre elles de façon également rigide et linéaire, ces dernières transmettant leur mouvement angulaire à l'axe moteur toujours dans le même sens de rotation et de forme intermittente, suivant les explosions dans les cylindres.

## Patentansprüche

1. Viertakt-Verbrennungsmotor, der dadurch charakterisiert wird, dass er aus einem oder unterschiedlichen parallelen Körpern mit zwei toroidalen Zylindern besteht, und dass die Dreh- und hin- und hergehende Bewegung der Kolben in jedem Doppelzylinderkörper aus aufeinanderfolgenden Explosionen in den Brennkammern der Zylinder erhalten wird, die diametral entgegengesetzt sind, und diese ringförmige Öffnungen aufweisen, die sich an den Rändern niedrigeren Durchmessers befinden, und die Energie der Kolben aus den Zylindern extrahiert wird auf Grund der starren Verbindung der Kantenoberfläche niedrigeren Durchmessers der Kolben mit einem gleitenden, ringförmigen Schieber, der die ringförmigen Öffnungen der Zylinder total stopft und eine unmittelbar leitende, sequentielle, lineare und starre Verbindung der Kolben zu zwei Radialkurbeln herstellt, die zueinander eine gleich starre und lineare Verbindung aufbauen, in der diese ihre Drehbewegung der Antriebachse im gleichen Drehungssinn und in regelmässigen Abständen gemäss den Explosionen in den Zylindern übermitteln.

## Claims

1. 4-stroke internal combustion engine, **characterized by** its settling on 1 or several parallel corps, with two toric cylinders and, in each bi-cylindrical corps, the angular and alternate movements of the pistons are based in successive explosions in combustion chambers of the diametrically opposed cylinders in which there are annular apertures placed along of the less diameter edges surface, being the pistons energy extracted to the cylinders exterior from the rigid connection of the less diameter edges surface of the pistons to one annular slider, which closes all the cylinders annular apertures and establishes the direct, sequential, linear and rigid connection of the pistons with two radial cranks, which have an equally rigid and linear connection between them, and they transmit its movements to the engine shaft, always in same rotation sense, in a intermittent way following the explosions within the cylinders.

2

2a

3

3a

4

4a

5

5a

6

6a

7

7a

8

8a

9

9a

10

10a

12c

12

12d

12a

12e

12b

13

14